Europäisches Patentamt

European Patent Office

Office européen des brevets

(11) Veröffentlichungsnummer : **0 451 205 B1**

(19)

(12) **EUROPÄISCHE PATENTSCHRIFT**

(45) Veröffentlichungstag der Patentschrift :
31.08.94 Patentblatt 94/35

(51) Int. Cl.⁵ : **H04N 7/00**

(21) Anmeldenummer : **90901771.7**

(22) Anmeldetag : **07.12.89**

(86) Internationale Anmeldenummer :
**PCT/EP89/01503**

(87) Internationale Veröffentlichungsnummer :
**WO 90/06655 14.06.90 Gazette 90/14**

(54) **MIT HERKÖMMLICHEN FERNSEHNORMEN KOMPATIBLES FERNSEHÜBERTRAGUNGSSYSTEM.**

(30) Priorität : **07.12.88 DE 3841173**
**23.12.88 DE 3843423**

(43) Veröffentlichungstag der Anmeldung :
**16.10.91 Patentblatt 91/42**

(45) Bekanntmachung des Hinweises auf die
Patenterteilung :
**31.08.94 Patentblatt 94/35**

(84) Benannte Vertragsstaaten :
**AT BE CH DE ES FR GB IT LI LU NL SE**

(56) Entgegenhaltungen :
**EP-A- 0 130 692**
**FERNSEH- UND KINO-TECHNIK, vol. 42, No: 7,**
**July 1988, (Heidelberg, DE) H. Weckenbrock et**
**al.: "ACTV": Advanced compatible Televi-**
**sion". Vorschlag für eine neue, kompatible**
**Breitbild-Fernsehnorm für die USA", pages**
**305-311**

(56) Entgegenhaltungen :
**IEEE TRANSACTIONS ON COMMUNICA-**
**TIONS, vol. COM-31, No: 11, November 1983,**
**IEEE, (New York), US), R.L. Schmidt et al.:**
**"Transmission of two NTSC color television**
**signals over a single satellite transponder via**
**time-frequency multiplexing", pages**
**1257-1266**

(73) Patentinhaber : **TELEFUNKEN Fernseh und**
**Rundfunk GmbH**
**Göttinger Chaussee 76**
**D-30453 Hannover (DE)**

(72) Erfinder : **HABERMANN, Werner**
**Schrämelstr. 120**
**D-8000 München 60 (DE)**
Erfinder : **DINSEL, Siegfried**
**Unertelstr. 21**
**D-8000 München 40 (DE)**

(74) Vertreter : **Einsel, Robert, Dipl.-Ing.**
**TELEFUNKEN Fernseh und Rundfunk GmbH**
**Patent- und Lizenzabteilung**
**Göttinger Chaussee 76**
**D-30453 Hannover (DE)**

## Beschreibung

Die Erfindung betrifft ein mit herkömmlichen Fernsehnormen mit 4:3-Bild-Seitenverhältnis kompatibles Fernsehübertragungsverfahren, sowie einen Coder und einen Decoder für dieses Verfahren. Ein derartiges Übertragungssystem ist in DE3840054 beschrieben.

Für verbesserte Fernsehübertragungssysteme erweist es sich schon aus Gründen der Akzeptanz durch die Öffentlichkeit als erforderlich, das Bild-Seitenverhältnis der Fernsehempfänger von bisher 4:3 auf 16:9 (=empfohlenes Bild-Seitenverhältnis künftiger HDTV-Standards) oder 5:3 zu erhöhen, ohne die Kompatibilität zu existierenden Fernsehnormen (PAL, NTSC, SECAM) zu verlieren. Hierzu wird in DE-C-3840054 vorgeschlagen, senderseitig zunächst jede vierte Zeile des Bildsignals abzusondern und die verbleibenden Zeilen spatial zu komprimieren oder in richtiger spatialer Lage zu interpolieren. In den frei werdenden spatialen Räumen werden am oberen und unteren Bildrand die abgesonderten vierten Zeilen direkt oder in verwürfelter Form zugesetzt. Das resultierende Bildsignal wird dann codiert übertragen. Aus dem empfangenen, decodierten Bildsignal wird das ursprüngliche Bildsignal mit dem Bild-Seitenverhältnis von 16:9 bzw. 5:3 dadurch rekonstruiert, daß die am oberen und unteren Bildrand zugesetzten vierten Zeilen nach erfolgter Entwürfelung in richtiger Zeilenreihenfolge in die übrigen spatial dekomprimierten Zeilen eingefügt werden. Bei der Wiedergabe des Empfangssignals auf einen herkömmlichen 4:3-Fernsehempfänger werden die am oberen und unteren Bildrand zugesetzten, verwürfelten Zeilen als Quasi-Rauschbalken wiedergegeben, was jedoch als störend empfunden werden kann.

Der Erfindung liegt die Aufgabe zugrunde, ein Verfahren der eingangs erwähnten Art dahingehend weiterzubilden, daß bei der Wiedergabe auf einem herkömmlichen 4:3-Fernsehempfänger die oberen und unteren Bildränder als im wesentlichen gleichmäßige Bildflächen erscheinen.

Diese Aufgabe wird durch die Merkmale der Patentansprüche 1 und 4 gelöst. Vorteilhafte Weiterbildungen der Erfindung ergeben sich aus den Unteransprüchen.

Der Erfindung liegt weiter die Aufgabe zugrunde, einen Coder und einen Decoder für das erfindungsgemäße Verfahren anzugeben.

Diese Aufgabe wird durch die Merkmale der Patentansprüche 13 bis 18 gelöst.

Im folgenden werden Ausführungsbeispiele der Erfindung anhand der Zeichnungen erläutert. Diese zeigen in:

Fig. 1  ein Blockschaltbild einer ersten senderseitigen Anordnung bei einer Ausführungsform des erfindungsgemäßen Fernsehübertragungssystems;

Fig. 2  ein Blockschaltbild einer ersten empfängerseitigen Anordnung bei dem Fernsehübertragungssystem nach Fig. 1;

Fig. 3  die Belegung eines herkömmlichen 8 MHz-Fernsehkanals mit den vom Fernsehübertragungssystem nach Fig. 1 und 2 übertragenen zwei Bildsignalbändern und den dazwischenliegenden Tonträgern;

Fig. 4  eine schematische Darstellung der senderseitigen Expansion und der empfängerseitigen Kompression der im rechten Bildsignal-Teilband von Fig. 3 übertragenen aktiven Bereiche der abgesonderten Fernsehzeilen;

Fig. 5  ein Blockschaltbild einer zweiten senderseitigen Anordnung für ein zweites erfindungsgemäßes Fernsehübertragungssystem;

Fig. 6  ein Blockschaltbild einer zweiten empfängerseiti gen Anordnung für das Fernsehübertragungssystem nach Fig. 5;

Fig. 7  ein schematisches Zeitdiagramm für eine sichtbare und eine unsichtbare Zeile bei dem Fernsehübertragungssystem nach Fig. 5.

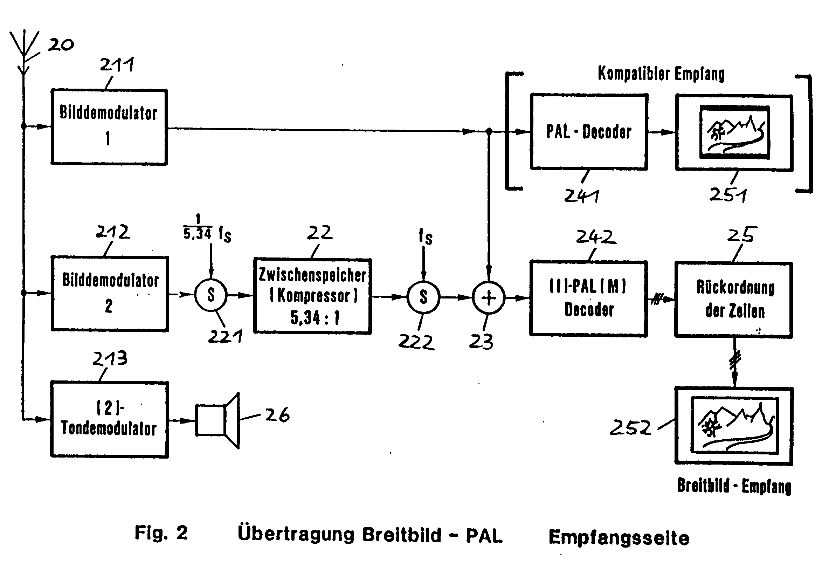

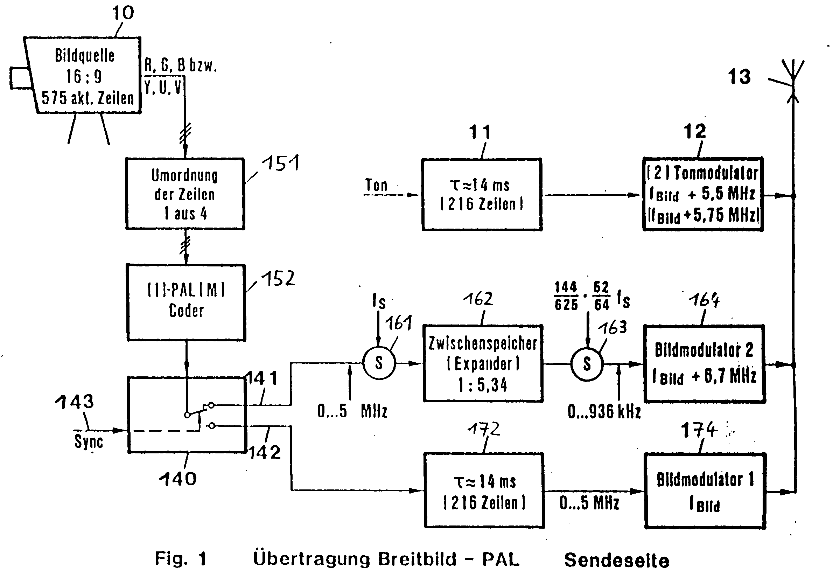

In dem senderseitigen Blockschaltbild gemäß Fig. 1 ist mit 10 eine Fernsehbildquelle bezeichnet, welche mit einem Raster entsprechend einem vergrößertem Bild-Seitenverhältnis von 16:9 (oder 5:3) abtastet. Im dargestellten Beispiel entsprechen die von der Bildquelle 10 erzeugten Bildsignale einem herkömmlichen Standard, mit Ausnahme des geänderten Bild-Seitenverhältnisses. Entsprechend dem PAL-Standard umfaßt jedes Fernsehbild 575 aktive Zeilen.

Das Ausgangssignal der Bildquelle 10, das entweder ein RGB-Signal oder ein YUV-Signal ist (durch eine Dreifach-Leitung angedeutet), wird einer Bildsignalverarbeitungsstufe 151 zugeführt, welche aus jeder Gruppe von vier (oder fünf) aufeinanderfolgenden Zeilen des Bildsignals eine Zeile absondert und die verbleibenden Zeilen spatial komprimiert oder in richtiger spatialer Lage interpoliert. In den frei werdenden spatialen Räumen am oberen und unteren Bildrand werden die abgesonderten vierten Zeilen zugesetzt. Die Einzelheiten dieser Bildsignalverarbeitung sind in DE3840054 angegeben. Das Ausgangssignal der Bildsignalverarbeitungsstufe 151 wird in einem nachgeschalteten Coder 152 entsprechend der gewünschten Fernsehnorm, z.B. PAL-Norm, codiert. Anstelle einer PAL-Codierung kann in vorteilhafter Weise auch entsprechend dem sogenannten I-PAL-Verfahren (DE-C-3338192) codiert werden, um Übersprech-Effekte zwischen Leuchtdichte und Farbsignalkomponenten zu vermeiden.

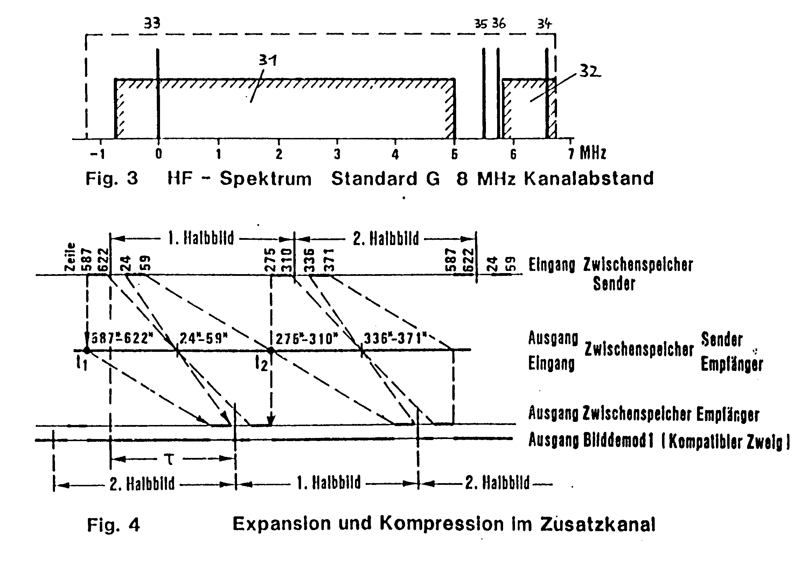

Die aktiven Teile der abgesonderten, am oberen und unteren Bildrand zugesetzten Zeilen werden zeitlich auf die Dauer eines Vollbildes expandiert, um dadurch deren Bandbreite zu verringern. Das hieraus resultierende Signal wird, wie Fig. 3 zeigt, innerhalb des üblichen 8 MHz-Fernsehkanals in der freien Lücke zwischen dem zweiten Tonträger 36 und dem oberen Ende des 8 MHz-Kanals übertragen (Fig. 3, zweites Teilband 32). Die nicht-aktiven Teile (Austastbereiche) der abgesonderten Zeilen sowie die verbleibenden Zeilen in ihrer Gesamtheit werden in normaler Trägerlage mit unveränderter Bandbreite unterhalb des ersten Tonträgers 35 im 8 MHz-Fernsehkanal übertragen (Fig. 3, erstes Teilband 31). In einem herkömmlichen 4:3-Fernsehempfänger liegt das erste Teilband 31 innerhalb der ZF-Durchlaßkurve, während das zweite Teilband 32 außerhalb der ZF-Durchlaßkurve liegt und somit von einem herkömmlichen 4:3-Fernsehempfänger unterdrückt wird. Bei der Wiedergabe des ersten Teilbandes 31 in einem herkömmlichen 4:3-Fernsehempfänger dienen die nicht-aktiven Teile der abgesonderten Zeilen am oberen und unteren Bildrand nur zur Synchronisation, wobei die fehlenden aktiven Zeilenbereiche am oberen und unteren Bildrand als Balken mit durchgehender Einfärbung, z.B. schwarz oder grau, wiedergegeben werden.

Das Ausgangssignal des Coders 152 wird einer Signalweiche 140 zugeführt, welche an ihrem Steuereingang 143 vom Synchronsignal des Studios (welches auch die Bildquelle 10 steuert) getaktet wird. Die abwechselnde Umschaltung der Signalweiche 140 auf die beiden Ausgänge 141 und 142 erfolgt in der Weise, daß dem ersten Ausgang 141 die aktiven Teile der abgesonderten, am oberen und unteren Bildrand zugesetzten Zeilen übertragen werden. Gemäß DE3840054 handelt es sich um 2x72 abgesonderte Zeilen pro Vollbild bzw. 4x36 Zeilen pro zwei Halbbilder. Dem zweiten Ausgang 142 der Signalweiche 140 werden die nicht-aktiven Teile bzw. Austastbereiche der abgesonderten 2x72 Zeilen sowie die verbleibenden Zeilen in ihrer Gesamtheit zugeführt. Dieser Signalanteil wird in einer ersten Verzögerungsstufe 172 um eine noch zu erläuternde Verzögerungszeit t verzögert und anschließend in einem ersten Bildmodulator 174 einem ersten Bildträger 33 aufmoduliert, welcher dem genormten Bildträger entspricht. Das obere Seitenband dieses Modulationssignals besitzt eine Bandbreite von 5 MHz, während das untere Seitenband normgemäß 0,75 MHz umfaßt (Fig. 3, erstes Teilband 31).

Das Signal am ersten Ausgang 141 der Signalweiche 140 wird in einer ersten Abtaststufe 161 mit einer ersten Abtastfrequenz $f_S$ abgetastet und in einen Zwischenspeicher 162 eingeschrieben. Bei PAL-Signalen wird als Abtastfrequenz $f_S$ üblicherweise der vierfache Wert der Farbträgerfrequenz gewählt. Der Zwischenspeicher 162 wird mit einer zweiten Abtastfrequenz ausgelesen, welche um das Verhältnis

$$\frac{\text{Zahl der abgesonderten Zeilen} \times \text{Dauer der aktiven Zeile}}{\text{Gesamtzahl der Zeilen} \times \text{Zeilendauer}}$$

kleiner ist als die erste Abtastfrequenz der Abtaststufe 161. Im betrachteten Beispielsfall beträgt die von einer zweiten Abtaststufe 163 erzeugte zweite Abtastfrequenz zum Auslesen des Zwischenspeichers 162 (144/625)x(52/64)x$f_S$. Entsprechend dem Verhältnis der ersten Abtastfrequenz zur zweiten Abtastfrequenz hat der Expansionsfaktor den Wert 5,34 . Das expandierte Signal am Ausgang der zweiten Abtaststufe 163 hat dementsprechend nur noch eine Bandbreite von 5MHz/5,34 = 936 kHz. Das expandierte Signal wird in einem zweiten Bildmodulator 164 einem zweiten Bildträger 34 aufmoduliert, welcher von dem ersten Bildträger 33 einen Frequenzabstand von ca. 6,7 MHz besitzt. Das so erzeugte Modulationssignal liegt innerhalb des 8 MHz-Fernsehkanals gemäß Fig. 3 mit seinem unteren Seitenband oberhalb des zweiten Tonträgers 36 und grenzt mit seinem Restseitenband an die Kanalgrenze an (Fig. 3, zweites Teilband 32). Wie schon erwähnt, liegt das zweite Teilband 32 außerhalb der ZF-Durchlaßkurve von herkömmlichen 4:3-Fernsehempfängern, welche nur das erste Teilband 31 durchlassen.

Der Fernsehton wird in einer zweiten Verzögerungsstufe 11 ebenfalls um die Verzögerungszeit t verzögert und in einem Tonmodulator 12 mit seinen stereophonen Anteilen den beiden Tonträgern 35 und 36 gemäß Fig. 3 aufmoduliert. Sämtliche Modulationssignale werden zum Sendesignal kombiniert, wie in Fig. 1 durch die Sendeantenne 13 angedeutet ist.

Das Blockschaltbild nach Fig. 2 zeigt die empfangsseitige Signalverarbeitung sowohl für einen herkömmlichen 4:3-Fernsehempfänger (erster Bilddemodulator 211, erster PAL-Decoder 241 und erste Wiedergabeeinheit 251) als auch für einen Breitbildempfänger mit einem Bild-Seitenverhältnis von 16:9 (oder 5:3). Das an der Empfangsantenne 20 empfangene Sendesignal wird parallel dem ersten Bilddemodulator 211 und dem zweiten Bilddemodulator 212 zugeführt, wobei der erste Bilddemodulator 211 den ersten Bildträger 33 mit dem ersten Teilband 31 und der zweite Bilddemodulator 212 den zweiten Bildträger 34 mit dem zweiten Teilband 32 demoduliert. Das Signal am Ausgang des zweiten Bilddemodulators 212 muß entsprechend der senderseitigen Expansion wieder komprimiert werden, was durch Verwendung einer ersten Abtaststufe 221 zum Einschreiben in einen Zwischenspeicher 22 und einer zweiten Abtaststufe 222 zum Auslesen des Zwischenspeichers 22 erfolgt. Die Abtastfrequenz der zweiten Abtaststufe 222 ist dabei um das Verhältnis

$$\frac{\text{Gesamtzahl der Zeilen x Zeilendauer}}{\text{Zahl der abgesonderten Zeilen x Dauer der aktiven Zeile}}$$

größer als die Abtastfrequenz der ersten Abtaststufe 221. Die Abtastfrequenz der zweiten Abtaststufe 222 entspricht vorzugsweise der Abtastfrequenz der senderseitigen ersten Abtaststufe 161, d.h., sie entspricht dem Wert $f_S$. Das modulierte Signal am Ausgang des zweiten Bilddemodulators 212 wird damit um den Faktor 5,34 komprimiert und entspricht dem Signal am ersten Ausgang 141 der senderseitigen Signalweiche 140. Die Bandbreite des komprimierten Signals beträgt dementsprechend wieder 936kHzx5,34 = 5MHz. Dieses Signal wird in der Addierstufe 23 dem Demodulationssignal (erstes Teilband 31) am Ausgang des ersten Bilddemodulators 211 in zeitlich richtiger Lage zugesetzt, so daß das resultierende, einem zweiten PAL-Decoder 242 zugeführte Signal dem Ausgangssignal des senderseitigen PAL-Coders 152 entspricht. Dem zweiten PAL-Decoder 242 ist eine Bildsignalverarbeitungsstufe 25 nachgeschaltet, welche die in der senderseitigen Bildsignalverarbeitungsstufe 151 erfolgte Umordnung der Zeilen (1 aus 4 bzw. 1 aus 5) rückgängig macht. Die zweite Wiedergabeeinheit 252 liefert aus dem resultierenden Bildsignal ein Fernsehbild mit vergrößertem Bild-Seitenverhältnis von 16:9 (oder 5:3). Wesentlich ist, daß für diese Bildübertragung der herkömmliche 8 MHz-Kanal sowohl im Studio als auch auf der Übertragungsstrecke ausreicht.

Der Fernsehton wird mit einem Tondemodulator 213 gewonnen und einem oder mehreren Lautsprechern 26 des 16:9-Breitbildempfängers bzw. des herkömmlichen 4:3-Empfängers zugeführt. Dieser herkömmliche Fernsehempfänger gibt, wie bereits dargelegt wurde, das Ausgangssignal des Bilddemodulators 211 mit Balken am oberen und unteren Bildrand wieder, welche eine gleichbleibende Färbung, z.B. schwarz oder grau, aufweisen. Die Störwirkung solcher gleichbleibend eingefärbter Balken ist vergleichsweise gering und entspricht der bekannten Wiedergabe von Breitwandfilmen im Fernsehen.

Die Expansion und Kompression gemäß Fig. 1 und 2 wird nachstehend anhand von Fig. 4 näher erläutert. Es ist für zwei aufeinanderfolgende Fernsehhalbbilder die zeitliche Lage der abgesonderten 4x36 Zeilen schematisch aufgetragen, wobei die Pakete zu je 36 Zeilen mit den laufenden Zeilennummern am Anfang und Ende des Zeilenpaketes wiedergegeben sind, und zwar:

Zeilen 587 bis 622,
Zeilen 24 bis 59,
Zeilen 275 bis 310 und
Zeilen 336 bis 371.

Entsprechend der Folge der Verfahrensschritte ist in Fig. 4 oben die zeitliche Lage der Zeilenpakete am ersten Ausgang 141 der senderseitigen Signalweiche 140, in Fig. 4 Mitte die zeitliche Lage der expandierten Zeilenpakete am Ausgang der senderseitigen zweiten Abtaststufe 163 bzw. am Eingang der empfängerseitigen ersten Abtaststufe 221 und in Fig. 4 unten die zeitliche Lage der Zeilenpakete am Ausgang der empfängerseitigen zweiten Abtaststufe 222 bzw. das dazu zeitlich durch die Verzögerung um die Zeit t (erste Verzögerungsstufe 172) angepaßte, verbleibende Signal am Ausgang des ersten Bilddemodulators 211 dargestellt. Wie man insbesondere durch den Vergleich der oberen mit der mittleren Darstellung erkennt, wird das Zeilenpaket der Zeilen 587 bis 622 um das 5,34-fache zeitlich gedehnt, wobei unmittelbar an das Ende des gedehnten Zeilenpaketes das darauffolgende, gedehnte Zeilenpaket der Zeilen 24 bis 59 lückenlos anschließt. Gleiches gilt für den lückenlosen Anschluß der gedehnten Zeilenpakete 275 bis 310 und 336 bis 371.

Bei der empfängerseitigen Kompression werden die Zeilenpakete auf ihre ursprüngliche zeitliche Länge zurückgeführt, jedoch mit einem zeitlichen Versatz, der in Fig. 4 mit der Verzögerungszeit t kenntlich gemacht ist. Dieser zeitliche Versatz t rührt von der Arbeitsweise der Zwischenspeicher 162 und 22 her. Und zwar kann der Zwischenspeicher 162 gleichzeitig mit dem Beginn der Zeile 587 (Zeitpunkt $t_1$) mit dem Einschreiben beginnen (senkrechter Pfeil von der oberen Darstellung in Fig. 4 zu mittleren Darstellung), während der empfängerseitige Zwischenspeicher 22 frühestens dann innerhalb eines Halbbildes mit dem Auslesen geendet haben kann, wenn der letzte gedehnte Abtastwert des zweiten Zeilenpaketes der Zeilen 24 bis 59 zum Zeitpunkt $t_2$ übertragen worden ist (senkrechter Pfeil von der mittleren Darstellung zu unteren Darstellung). Die Verzögerungszeit t errechnet sich somit aus der Differenz zwischen der Gesamtzahl der aktiven Zeilen eines Halbbildes und der Anzahl der abgesonderten Zeilen eines Halbbildes, im betrachteten Beispiel (288-72) Zeilen = 216 Zeilen, entsprechend ca. 13,8 ms. Das Signal am zweiten Ausgang 142 der Signalweiche 140 (entspricht dem ersten Teilband 31) wird um diese Verzögerungszeit t in der ersten Verzögerungsstufe 172 verzögert. Gleiches gilt für den Ton in der zweiten Verzögerungsstufe 11. Infolge der Verzögerung in der ersten Verzögerungsstufe 172 liegt das Signal am Ausgang des ersten Bilddemodulators 211 (unterste Darstellung von Fig. 4) zeitlich exakt richtig zu dem Ausgangssignal des Zwischenspeichers 22, d.h. daß die Informationen beider Signale zeitlich exakt richtig verkämmt sind und kombiniert werden können.

Die vorstehend erläuterte Verzögerung um die Verzögerungszeit t läßt sich anschaulich ferner damit erklären, daß der senderseitige Zwischenspeicher 162 diskontinuierlich einschreibt, aber kontinuierlich ausliest, und daß der empfängerseitige Zwischenspeicher 22 kontinuierlich einschreibt, aber diskontinuierlich ausliest.

Im VHF-Bereich, in Kabelnetzen oder in anderen Fernsehstandards kann die Kanalbandbreite auf 7 MHz begrenzt sein. Um auch dort die Aufgabe der Erfindung zu lösen, wird ein weiteres Ausführungsbeispiel aufgezeigt.

Dazu werden in den genannten, z.B. 2x72, Zeilen am oberen und unteren Bildrand geänderte Informationen untergebracht. Um diese Informationen für den Betrachter eines 4:3-Standard-Fernsehempfängers möglichst unsichtbar zu machen, ist nur ein begrenzter Modulationsgrad des Videosignals und damit auch nur eine begrenzte Störabstandsverminderung zulässig. Darum werden nicht analoge Teile der abgesonderten Zeilen selbst, sondern analoge Differenzsignale von Zeilen oder digitale Stützinformationen zum Empfänger übertragen. Mit Hilfe dieser analogen Differenzsignale oder dieser digitalen Stützinformationen werden im Empfänger aus den sichtbar (jeweils drei von vier bzw. jeweils vier von fünf) übertragenen Zeilen die abgesonderten (jeweils eine von vier bzw. eine von fünf) wieder im wesentlichen rekonstruiert.

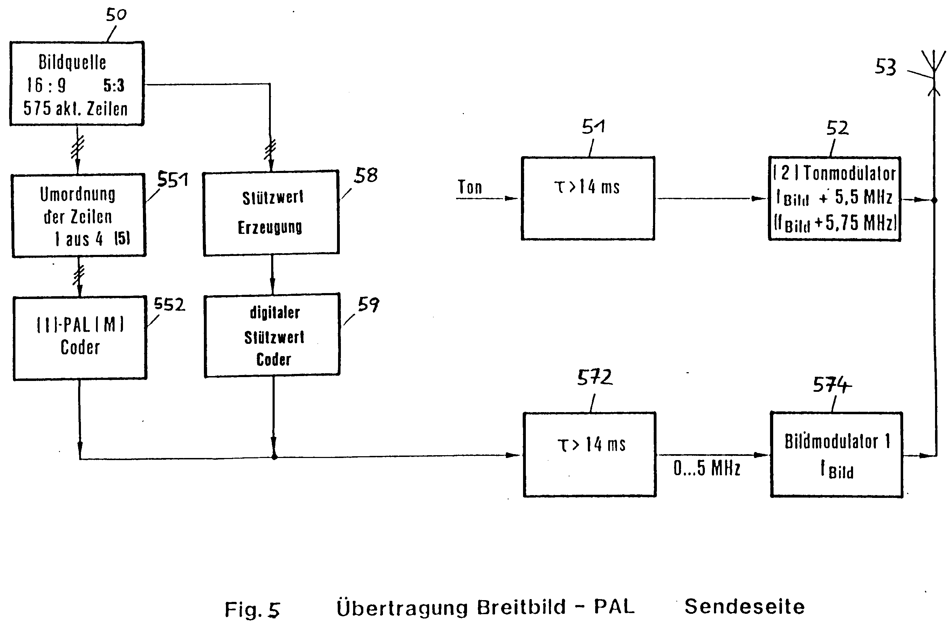

In dem senderseitigen Blockschaltbild gemäß Fig. 5 ist mit 50 eine Fernsehbildquelle bezeichnet, welche mit einem Raster entsprechend einem vergrößerten Bild-Seitenverhältnis von 16:9 (oder 5:3) abtastet. Im dargestellten Beispiel entsprechen die von der Bildquelle 50 erzeugten Bildsignale einem herkömmlichen Standard, mit Ausnahme des geänderten Bild-Seitenverhältnisses. Entsprechend dem PAL-Standard umfaßt jedes Fernsehbild 575 aktive Zeilen.

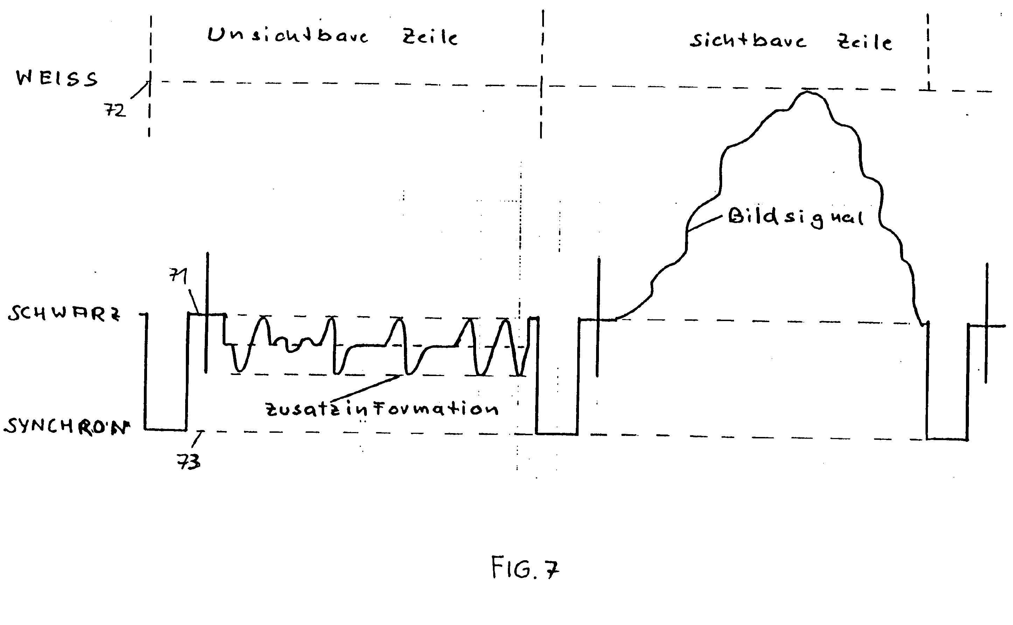

Das Ausgangssignal der Bildquelle 50 wird einer Bildsignalverarbeitungsstufe 551 zugeführt, welche aus jeder Gruppe von vier (oder fünf) aufeinanderfolgenden Zeilen des Bildsignals eine Zeile absondert und die verbleibenden Zeilen spatial komprimiert oder in richtiger spatialer Lage interpoliert. In den frei werdenden spatialen Räumen am oberen und unteren Bildrand werden aus den abgesonderten vierten (oder fünften) Zeilen gewonnene Signale zugesetzt wie bereits oben beschrieben. Die Einzelheiten dieser Bildsignalverarbeitung sind in DE3840054 angegeben. Im Gegensatz zu DE3840054 werden aber nicht die abgesonderten Zeilen direkt, sondern, wie das Beispiel in Tabelle 1 zeigt, analog codierte Differenzsignale, z.B. als Differenzwert zu räumlich oder zeitlich benachbarten Zeilen und zusätzlich ohne Farbträger übertragen. Durch diese Codierung wird das durch eine verringerte Modulation bedingte stärkere Rauschen in den abgesonderten Zeilen bei der Decodierung im Empfänger auf drei Zeilen verteilt, wie Tabelle II zeigt. Wegen der Korrelation benachbarter Zeilen wird durch die Differenzbildung automatisch der mittlere Modulationsgrad reduziert. Die abgesonderten codierten Zeilen werden unterhalb des Schwarzpegels des Videosignals im Bereich Superschwarz und damit unsichtbar am oberen und unteren Bildrand des normalen PAL-Empfängers übertragen gemäß Fig. 7. Zusätzlich kann in den abgesonderten Zeilen die hintere Schwarzschulter 71 in Richtung Weißpegel 72 verschoben werden, womit sich der Pegelbereich zwischen Schwarzpegel 71 und Synchronpegel 73 entsprechend vergrößert.

Bei der Codierung mit analogen Differenzsignalen entfallen die Schaltungen 58 und 59 im Blockschaltbild. Das Ausgangssignal der Bildsignalverarbeitungsstufe 551 wird in einem nachgeschalteten Coder 552 entsprechend der gewünschten Fernsehnorm, z.B. PAL-Norm, codiert. Anstelle einer PAL-Codierung kann in vorteilhafter Weise auch entsprechend dem sogenannten I-PAL-Verfahren (DE-PS 3338192) codiert werden, um Übersprech-Effekte zwischen Leuchtdichte und Farbsignalkomponenten zu vermeiden.

TABELLE I

| Zeilen-Nr. | Zeilenkennung | interpolierte 431 Zeilen | separierte 144 Zeilen |
|---|---|---|---|
| 1 | A | $A = A'$ | |
| 2 | B | | |
| | | $\dfrac{2}{3}B + \dfrac{1}{3}C = B'$ | |
| 3 | C | | |
| | | $\dfrac{1}{3}C + \dfrac{2}{3}D = C'$ | $\dfrac{1}{2}D - \dfrac{1}{2}C = X'$ |
| 4 | D | | |
| 5 | A | A | |
| \| | \| | \| | \| |
| \| | \| | \| | \| |
| \| | \| | \| | \| |
| 575 | | | |

Der kompatible 4:3-Fernsehempfänger wertet nur die 431 interpolierten Zeilen im 16:9-Format aus. Im verbesserten Breitbild-Empfänger werden alle 575 aktiven Zeilen entsprechend der folgenden Tabelle II rekonstruiert.

TABELLE II

Beispiel einer Zeilen-Rekonstruktion im 16:9-Breitbild-Empfänger

| Zeilen-Nr. | Rekonstruktion aus den 431 Zeilen und den 144 Zeilen | Zeilen-kennung |
|---|---|---|
| 1 | A | A |
| 2 | $\frac{3}{2}\,B' - \frac{1}{2}\,C' + \frac{2}{3}\,X'$ | B |
| 3 | $C' - \frac{4}{3}\,X'$ | C |
| 4 | $C' + \frac{2}{3}\,X'$ | D |
| ⋮ | ⋮ | ⋮ |
| 575 | | |

Codiertes Bildsignal und Tonsignal werden jeweils um ca. 14 ms verzögert. Diese Verzögerungszeit entspricht der der ersten 11 und zweiten 172 Verzögerungsstufe aus Fig. 1. Anschließend erfolgt die FM-Modulation des Tones im Tonmodulator 52 und die bekannte Restseitenband-AM-Modulation des Bildsignals im Bildmodulator 574.

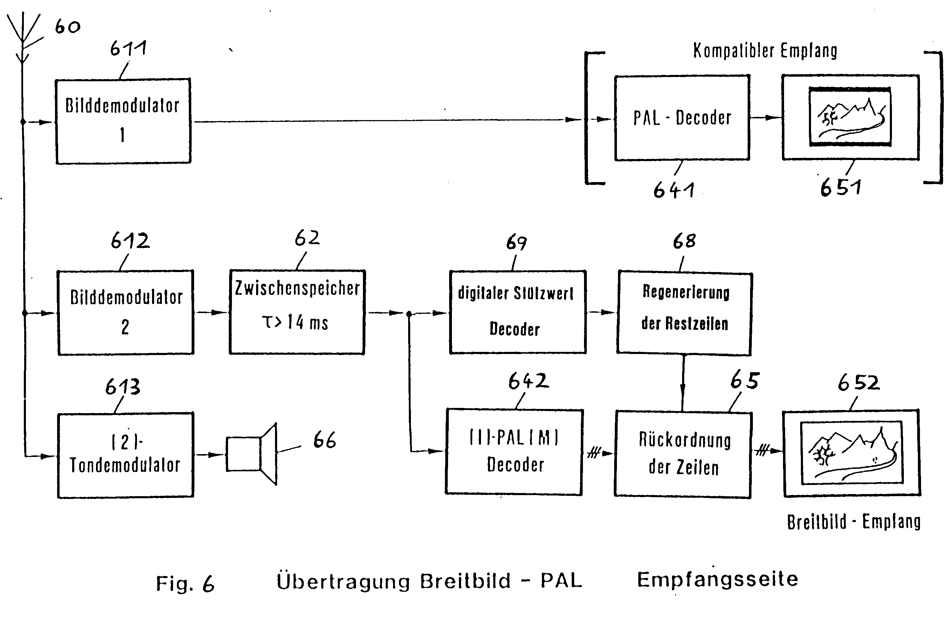

Auf der Empfangsseite Fig. 6 wird bei normalem PAL-Empfang mit einem üblichen Bilddemodulator 611 und PAL-Decoder 641 das Breitbild mit den bekannten schwarzen Rändern am oberen und unteren Bildrand auf dem 625-Zeilen-Bildschirm 651 wiedergegeben. Im 16:9-(oder 5:3-)Breitbildempfänger wird das Bildsignal in einem Bilddemodulator 612 demoduliert und in einem Zwischenspeicher 62 zwischengespeichert. Die Schaltungen 69 und 68 entfallen, wenn analoge Differenzsignale codiert und übertragen werden. Die zwischengespeicherten Bildsignale werden im PAL-Decoder 642 decodiert. In Bildsignalverarbeitungsstufe 65 werden wieder die ursprünglichen 575 Zeilen regeneriert und dem 16:9-(oder 5:3-)Bildschirm 652 zugeführt. Der Fernsehton wird in einem Tondemodulator 613 demoduliert und in einem oder mehreren Lautsprechern 66 wiedergegeben.

Bei einer alternativen Ausführungsform der Breitbild-Übertragung werden nicht analog codierte Differenzsignale, sondern digitale Stützinformationen übertragen, mit denen im 16:9-(oder 5:3-)Breitbildempfänger aus den jeweils drei (oder vier) Zeilen des kompatiblen Empfangs jeweils die ursprünglichen vier (oder fünf) Zeilen rekonstruiert werden können. Das Senderblockschaltbild in Fig. 5 enthält dann zusätzlich einen Stützwert-Prozessor 58, der z.B. Bewegungsvektoren zur empfängerseitigen Rekonstruktion der jeweils fehlenden Zeile berechnet. Die entsprechenden Ausgangssignale werden in einem digitalen Stützwert-Coder 59 codiert und in den Zeilen am oberen und unteren Bildschirmrand z.B. unterhalb des Schwarzwertes übertragen. Die Codierung im digitalen Stützwert-Coder 59 wird so gewählt, daß die Haupt-Energieanteile wie bei einem Duobinär-Code in der Mitte des Videospektrums liegen. Als digitale Stützfunktion kann pro abgesonderter Zeile eine Anzahl von Bewegungsvektoren mitübertragen werden. Diese Anzahl ist durch die zur Verfügung stehende Übertragungskapazität begrenzt.

Zur Verminderung der Sichtbarkeit dieser Digital-Modulation wird die Taktfrequenz mit der Zeilenfrequenz verkoppelt, außerdem wird das digitale Spektrum in eine wenig störende Zeilen- und Bildoffsetposition gelegt.

Im entsprechenden Empfänger erfolgt in einem digitalen Stützwert-Decoder 69 die Decodierung der übertragenen Stützwerte und in einer Bildsignalverarbeitungsschaltung 68 die Regeneration der im Sender jeweils abgetrennten vierten (oder fünften) Zeilen des Breitbildes.

Für ein 16:9-Bildformat wird eine von jeweils vier Zeilen speziell behandelt und für ein 5:3-Bildformat eine von jeweils fünf.

Für Fernsehsysteme mit anderen Zeilenzahlen ändern sich die Zahlen entsprechend. Für ein Fernsehsystem mit 525 Zeilen bzw. 481 aktiven Zeilen können z.B. die Randstreifen jeweils 60 Zeilen enthalten und der aktive Bereich 361 Zeilen.

## Patentansprüche

1. Mit herkömmlichen Fernsehnormen mit 4:3-Bild-Seitenverhältnis kompatibles Fernsehübertragungverfahren, bei dem bildquellenseitig (10, 50) mit einem Raster entsprechend einem vergrößerten Bild-Seitenverhältnis von 16:9 abgetastet wird und bei dem ein erstes Teilband (31) des Bildsignals einem ersten Bildträger (33) aufmoduliert (174) ist, mit folgenden Verfahrensschritten:

   a) aus jeder Gruppe von vier aufeinanderfolgenden Zeilen des Bildsignals wird eine Zeile abgesondert und die verbleibenden Zeilen werden spatial komprimiert oder in richtiger spatialer Lage interpoliert;

   b) in den frei werdenden spatialen Räumen am oberen und unteren Bildrand werden die abgesonderten vierten Zeilen zugesetzt (151, 551);

   c) das resultierende Bildsignal wird codiert übertragen, und

   d) aus dem empfangenen, decodierten Bildsignal wird das ursprüngliche Bildsignal mit dem Bild-Seitenverhältnis von 16:9 dadurch rekonstruiert, daß die abgesonderten, am oberen und unteren Bildrand zugesetzten Zeilen in richtiger Zeilenreihenfolge in die übrigen spatial dekomprimierten Zeilen eingefügt werden (25, 65),

   wobei das übertragene Bildsignal alternativ auch von einem herkömmlichen 4:3-Empfänger decodierbar ist, der das aus dem ersten Teilband (31) demodulierte Bildsignal mit Balken am oberen und unteren Bildrand wiedergibt und wobei zur Übertragung des codierten Bildsignals folgende senderseitige Verfahrensschritte durchgeführt werden:

   e) die aktiven Teile der abgesonderten, am oberen und unteren Bildrand zugesetzten Zeilen werden zeitlich auf die Dauer eines Vollbildes expandiert (161 bis 163 und Fig. 4) und auf einem am oberen Ende des Fernsehkanals liegenden zweiten Bildträger (34) aufmoduliert (164), derart, daß das resultierende zweite Teilband (32) im wesentlichen außerhalb der ZF-Durchlaßkurve eines herkömmlichen 4:3-Empfängers (211, 241, 251, 213, 26) liegt;

   f) die nicht-aktiven Teile (Austastbereich) der abgesonderten, am oberen und unteren Bildrand zugesetzten Zeilen sowie die verbleibenden Zeilen in ihrer Gesamtheit werden, insbesondere mit einer einer Signallaufzeit bei der Dekomprimierung (221, 22, 222) entsprechenden Verzögerung ($\tau$ in Fig. 4), auf den ersten Bildträger (33) aufmoduliert, derart, daß das resultierende erste Teilband (31) im wesentlichen innerhalb der ZF-Durchlaßkurve eines herkömmlichen 4:3-Empfängers (211, 241, 251, 213, 26) liegt und für diesen Empfänger das Standardsignal enthält;

   g) beide modulierten Bildträger (33, 34) werden zusammen mit dem bzw. den Tonträger(n) (35, 36) zum Sendesignal (an 13) kombiniert,

   und daß zur Rekonstruktion des ursprünglichen Bildsignals aus dem empfangenen decodierten Bildsignal folgende empfängerseitige Verfahrensschritte durchgeführt werden:

   h) der am oberen Kanalende liegende zweite Bildträger (34) wird demoduliert und das aus dem zweiten Teilband (32) demodulierte Bildsignal wird zeitlich in den Ausgangszustand gemäß e) komprimiert;

   i) der erste Bildträger (33) wird demoduliert und das aus dem ersten Teilband (31) demodulierte Bildsignal wird dem aus Schritt h) enthaltenen Bildsignal zeitrichtig zugesetzt (23, 242, 25), wobei das daraus resultierende Gesamtsignal decodiert und mit dem Bild-Seitenverhältnis 16:9 gemäß Schritt d) wiedergegeben (252) wird.

2. Verfahren nach Anspruch 1, **dadurch gekennzeichnet,** daß zur Durchführung des Schrittes e) folgende Teilschritte durchgeführt werden:

- aus dem ankommenden Signal werden die aktiven Teile der abgesonderten Zeilen abgetrennt und mit einer ersten Abtastfrequenz (161), insbesondere mit dem vierfachen der Farbträgerfrequenz, in einen ersten Zwischenspeicher (162) eingelesen;
- die im ersten Zwischenspeicher (162) gespeicherten Abtastwerte werden mit einer um das Verhältnis

$$\frac{\text{Zahl der abgesonderten Zeilen} \times \text{Dauer der aktiven Zeile}}{\text{Gesamtzahl der Zeilen} \times \text{Zeilendauer}}$$

gegenüber der ersten Abtastfrequenz (161) kleineren, zweiten Abtastfrequenz (163) ausgelesen.

3. Verfahren nach Anspruch 1 und 2, **dadurch gekennzeichnet**, daß zur Durchführung des Schrittes h) folgende Teilschritte durchgeführt werden:
- das aus dem zweiten Teilband (32) demodulierte Bildsignal wird mit einer dritten Abtastfrequenz (221), die insbesondere gleich der zweiten Abtastfrequenz (163) ist, in einem zweiten Zwischenspeicher (22) eingelesen;
- die im zweiten Zwischenspeicher (22) gespeicherten Abtastwerte werden mit einer um das Verhältnis

$$\frac{\text{Gesamtzahl der Zeilen} \times \text{Zeilendauer}}{\text{Zahl der abgesonderten Zeilen} \times \text{Dauer der aktiven Zeile}}$$

gegenüber der dritten Abtastfrequenz (221) größeren, vierten Abtastfrequenz (222), insbesondere mit dem vierfachen der Farbträgerfrequenz, ausgelesen.

4. Mit herkömmlichen Fernsehnormen mit 4:3-Bild-Seitenverhältnis kompatibles Fernsehübertragungverfahren, bei dem bildquellenseitig (10, 50) mit einem Raster entsprechend einem vergrößerten Bild-Seitenverhältnis von 16:9 abgetastet wird und bei dem ein erstes Teilband (31) des Bildsignals einem ersten Bildträger (33) aufmoduliert (174) ist, mit folgenden Verfahrensschritten:

a) aus jeder Gruppe von vier aufeinanderfolgenden Zeilen des Bildsignals wird eine Zeile abgesondert und die verbleibenden Zeilen werden spatial komprimiert oder in richtiger spatialer Lage interpoliert;

b) in den frei werdenden spatialen Räumen am oberen und unteren Bildrand werden die abgesonderten vierten Zeilen zugesetzt (151, 551);

c) das resultierende Bildsignal wird codiert übertragen, und

d) aus dem empfangenen, decodierten Bildsignal wird das ursprüngliche Bildsignal mit dem Bild-Seitenverhältnis von 16:9 dadurch rekonstruiert, daß die abgesonderten, am oberen und unteren Bildrand zugesetzten Zeilen in richtiger Zeilenreihenfolge in die übrigen spatial dekomprimierten Zeilen eingefügt werden (25, 65),

wobei das übertragene Bildsignal alternativ auch von einem herkömmlichen 4:3-Empfänger decodierbar ist, der das aus dem ersten Teilband (31) demodulierte Bildsignal mit Balken am oberen und unteren 3ildrand wiedergibt und wobei die aktiven Teile der abgesonderten Zeilen innerhalb eines Pegelbereichs zwischen einem Richtung Weißpegel verschobenen Schwarzpegel (71) und dem Synchronimpulspegel (73) am oberen und unteren Bildrand mit reduziertem Modulationsgrad analog codiert übertragen werden, insbesondere als Differenzsignale zwischen jeweils einer abgesonderten Zeile und räumlich oder zeitlich benachbarten Zeilen.

5. Verfahren nach Anspruch 4, **dadurch gekennzeichnet,** daß zusätzlich die hintere Schwarzschulter (71) in Richtung Weißpegel (72) verschoben wird.

6. Verfahren nach Anspruch 4 oder 5, **dadurch gekennzeichnet**, daß in den Zeilen am oberen und unteren Bildrand der Farbträger abgeschaltet wird.

7. Verfahren nach Anspruch 4, **dadurch gekennzeichnet,** daß in den freien spatialen Räumen am oberen und unteren Bildrand ausschließlich digitale Stützinformation zur Rekonstruktion der abgesonderten Zeilen aus den sichtbar übertragenen Zeilen des gleichen und/oder des benachbarten Vollbildes übertragen wird.

8. Verfahren nach Anspruch 7, **dadurch gekennzeichnet**, daß als digitale Stützfunktion eine Anzahl von Bewegungsvektoren pro abgesonderter Zeile übertragen wird.

9. Verfahren nach Anspruch 7 oder 8, **dadurch gekennzeichnet**, daß die Bewegungsvektoren digital übertragen werden, und daß die digitale Codierung (59) so gewählt wird, daß die Haupt-Energieanteile wie bei einem Duobinär-Code in der Mitte des Videospektrums liegen.

10. Verfahren nach Anspruch 7, 8 oder 9, **dadurch gekennzeichnet**, daß der Takt der digitalen Stützinformation mit der Zeilenfrequenz verkoppelt wird.

11. Verfahren nach Anspruch 7, 9 oder 10, **dadurch gekennzeichnet**, daß die Taktfrequenz so verschoben wird, daß die Spektralkomponenten der digitalen Stützinformation in einer in Bezug auf die Sichtbarkeit der Digitalmodulation in den Rändern im herkömmlichen 4:3-Empfänger günstigen Zeilen- und Bildoffsetposition liegen.

12. Verfahren nach einem oder mehreren der Ansprüche 4 bis 11, **dadurch gekennzeichnet,** daß aus jeder Gruppe von vier oder fünf aufeinanderfolgenden Zeilen eine Zeile abgesondert wird.

13. Coder für ein Verfahren nach Anspruch 1 oder 2, versehen mit einer Bildsignalverarbeitungsstufe (151) zur Absonderung und spatialen Kompression oder Interpolation von Zeilen, mit einem nachgeschalteten Farb-Coder (152), insbesondere I-PAL-M-Coder, mit einer Vorrichtung zur zeitlichen Expansion (161, 162, 163) der Zeilen aus den Rändern, mit einem nachgeschalteten zweiten Bildmodulator (164) und mit einem ersten, Bildmodulator (174), der insbesondere über eine Verzögerungsstufe (172) angesteuert wird, wobei die Ausgangssignale des ersten und des zweiten Bildmodulators kombiniert werden.

14. Decoder für ein Verfahren nach Anspruch 1 oder 3, versehen mit einem ersten, Bilddemodulator (211), mit einem zweiten Bilddemodulator (212), der die Zeilen aus den Rändern demoduliert, und einer nachgeschalteten Vorrichtung zur zeitlichen Kompression (221, 22, 222) der Zeilen aus den Rändern, mit einer Addierstufe (23) zur Kombination der Ausgangssignale des ersten Bilddemodulators und der Vorrichtung zur zeitlichen Kompression, mit einem nachgeschalteten Farb-Decoder (152), insbesondere I-PAL-M-Decoder, und mit einer Bildsignalverarbeitungsstufe (25), die die Zeilen wieder in der ursprünglichen Reihenfolge anordnet und/oder interpoliert.

15. Coder für ein Verfahren nach einem oder mehreren der Ansprüche 4 bis 12, versehen mit einer Bildsignalverarbeitungsstufe (551) zur Absonderung von Bildrand-Zeilen und zur spatialen Interpolation der verbleibenden Zeilen, mit einem nachgeschalteten Farb-Coder (552), insbesondere I-PAL-M-Coder, mit einem Stützwert-Prozessor (58), der anstelle der Bildrand-Zeilen digitale Stützinformationen zur empfängerseitigen Rekonstruktion der ursprünglichen Zeilen erzeugt und dem ein Stützwert-Coder (59) nachgeschaltet ist, mit einem Bildmodulator (574), dem die kombinierten Ausgangssignale von dem Stützwert-Coder und von dem Farb-Coder zugeführt werden, insbesondere über eine Verzögerungsstufe (572).

16. Decoder für ein Verfahren nach einem oder mehreren der Ansprüche 4 bis 12, versehen mit:
    - einem Bilddemodulator (612), dessen Ausgangssignale einem Farb-Decoder (642), insbesondere einem I-PAL-M-Decoder, und einem digitalen Stützwert-Decoder (69) zugeführt werden, der die an den Bildrand-Zeilen angeordneten digitalen Stützinformationen zur empfängerseitigen Rekonstruktion der ursprünglichen Zeilen decodiert;
    - einer dem Stützwert-Decoder nachgeschalteten Bildsignalverarbeitungsschaltung (68), die die Rand-Zeilen wieder regeneriert,
    - einer dem Farb-Decoder nachgeschalteten Bildsignalverarbeitungsstufe (65), die mit Hilfe der Rand-Zeilen die Zeilen wieder in der ursprünglichen Reihenfolge anordnet.

## Claims

1. A television transmission method compatible with conventional television norms using a 4:3 picture aspect ratio in which there is a scanning with a raster corresponding to an enlarged picture aspect ratio of 16:9 at the picture-source end (10, 50) and in which a first band-section (31) of the video signal is modulated (174) onto a first vision carrier (33), including the following method steps:
    a) one line is separated out from each group of four consecutive lines of the video signal and the remaining lines are spatially compressed or interpolated at the correct spatial location;
    b) the separated fourth lines are added into the spatial zones that have become free at the upper and lower edges of the picture (151, 551);
    c) the resulting video signal is transmitted in coded fashion, and
    d) the original video signal having the picture aspect ratio of 16:9 is reconstructed from the received, decoded video signal in that the separated lines that were mixed in at the upper and lower edges of the picture are inserted, with the correct line sequence, into the remaining, spatially decompressed lines (25, 65),

wherein, alternatively, the transmitted video signal can also be decoded by a conventional 4:3 receiver which reproduces the video signal demodulated from the first band-section (3) with bars at the upper and lower edges of the picture and wherein, for the transmission of the coded video signal, the following method steps are carried out at the transmitting end:

e) the active parts of the separated lines that were mixed in at the upper and lower edges of the picture are expanded in time up to the duration of a frame (161 to 163 and Fig. 4) and modulated (164) onto a second vision carrier (34) which is located at the upper end of the television channel in such a way that the resulting second band-section (32) lies substantially outside the IF pass-band curve of a conventional 4:3 receiver (211, 241, 251, 213, 26);

f) the non-active parts (blanking region) of the separated lines that were mixed in at the upper and lower edges of the picture as well as the remaining lines are modulated in toto onto the first vision carrier (33), in particular with a delay ($\tau$ in Fig. 4) corresponding to a signal transit time occurring during the decompressing (221, 22, 222), in such a way that the resulting first band-section (31) lies substantially within the IF pass-band curve of a conventional 4:3 receiver (211, 241, 251, 213, 26) and incorporates the standard signal for this receiver;

g) both modulated vision carriers (33, 34) together with the one or the plurality of sound carrier (s) (35, 36) are combined into the transmitting signal (at 13),

and that, for the reconstruction of the original video signal from the received decoded video signal, the following method steps are carried out at the receiving end:

h) the second vision carrier (34) located at the upper end of the channel is demodulated and the video signal demodulated from the second band-section (32) is compressed in time in the output state in accordance with e);

i) the first vision carrier (33) is demodulated and the video signal demodulated from the first band-section (31) is added at the correct time to the video signal obtained from step h) (23, 242, 25) whereby the total signal resulting therefrom is decoded and reproduced (252) with the picture aspect ratio 16:9 in accordance with step d).

2. Method in accordance with Claim 1, characterised in that, for the implementation of the step e), the following partial steps are carried out:

- the active parts of the separated lines are separated from the incoming signal and read into a first buffer store (162) at a first scanning frequency (161), in particular at a multiple of four times that of the colour carrier frequency;
- the sample values stored in the first buffer store (162) are read out at a second scanning frequency (163) which is smaller relative to the first scanning frequency (161) by the ratio

$$\frac{\text{number of the separated lines} \times \text{duration of the active lines}}{\text{total number of the lines} \times \text{line duration}},$$

3. Method in accordance with Claim 1 and 2, characterised in that, for the implementation of the step h), the following partial steps are carried out:

- the video signal demodulated from the second band-section (32) is read into a second buffer store (22) at a third scanning frequency (221) which, in particular, is equal to the second scanning frequency (163);
- the sample values stored in the second buffer store (22) are read out at a fourth scanning frequency (222), in particular at a multiple of four times that of the colour carrier frequency, which is greater relative to the third scanning frequency (221) by the ratio

$$\frac{\text{total number of the lines} \times \text{line duration}}{\text{number of the separated lines} \times \text{duration of the active lines}}$$

4. A television transmission method compatible with conventional television norms using a 4:3 picture aspect ratio in which there is a scanning with a raster corresponding to an enlarged picture aspect ratio of 16:9 at the picture source end (10, 50) and in which a first band-section (31) of the video signal is modulated (174) onto a first vision carrier (33), including the following method steps:

a) one line is separated out from each group of four consecutive lines of the video signal and the remaining lines are spatially compressed or interpolated at the correct spatial location;

b) the separated fourth lines are added into the spatial zones that have become free at the upper and lower edges of the picture (151, 551);

c) the resulting video signal is transmitted in coded fashion, and

d) the original video signal having the picture aspect ratio of 16:9 is reconstructed from the received, decoded video signal in that the separated lines that were mixed in at the upper and lower edges of the picture are inserted, with the correct line sequence, into the remaining, spatially decompressed lines (25, 65),

wherein, alternatively, the transmitted video signal can also be decoded by a conventional 4:3 receiver which reproduces the video signal demodulated from the first band-section (3) with bars at the upper and lower edges of the picture and wherein, the active parts of the separated lines within a level region between a black level (71) that is displaced in the direction of the white level and the synchronising pulse level (73) are transmitted at the upper and lower edges of the picture using analogue coding with a reduced degree of modulation, in particular, as difference signals between a respective separated line and lines that are adjacent in space or time.

5. Method in accordance with Claim 4, characterised in that, the back porch (71) is additionally displaced in the direction of the white level (72).

6. Method in accordance with Claim 4 or 5, characterised in that, the colour carrier is switched off in the lines at the upper and lower edges of the picture.

7. Method in accordance with Claim 4, characterised in that, an exclusively digital item of supporting information for the reconstruction of the separated lines from the visibly transmitted lines of the same and/or of the adjacent frame is transmitted in the free spatial zones at the upper and lower edges of the picture.

8. Method in accordance with Claim 7, characterised in that, a number of activity vectors per separated line is transmitted as the digital supporting function.

9. Methad in accordance with Claim 7 or 8, characterised in that, the activity vectors are transmitted digitally and that the digital coding (59) is selected such that the main energy components lie in the middle of the video spectrum as for a double binary code.

10. Method in accordance with Claim 7, 8 or 9, characterised in that, the clock rate of the digital item of supporting information is coupled to the line frequency.

11. Method in accordance with Claim 7 9 or 10, characterised in that, the clock frequency is displaced such that the spectral components of the digital item of supporting information are located in a line and picture offset position which is favourable in respect of the visibility of the digital modulation at the edges in the conventional 4:3 receiver.

12. Method in accordance with one or more of the Claims 4 to 11, characterised in that, one line is separated from each group of four or five consecutive lines.

13. Coder for a method in accordance with Claim 1 or 2 which is provided, with a video signal processing stage (151) for the separation and spatial compression or interpolation of lines, with a subsequently connected colour coder (152), in particular an 1-PAL-M coder, with a device for the expansion in time (161, 162, 163) of the lines from the edges, with a subsequently connected second vision modulator (164) and with a first vision modulator (174) which is controlled in particular by a delay stage (172), wherein the output signals of the first and the second vision modulators are combined.

14. Decoder for a method in accordance with Claim 1 or 3 which is provided, with a first vision demodulator (211), with a second vision demodulator (212) which demodulates the lines from the edges and a subsequently connected device for time compressing (221, 22, 222) the lines from the edges, with a summing stage (23) for combining the output signals of the first vision demodulator and of the device for compressing in time, with a subsequently connected colour decoder (152), in particular an I-PAL-M decoder, and with a video signal processing stage (25) which arranges and/or interpolates the lines back into the original sequence.

15. Coder for a method in accordance with one or more of the Claims 4 to 12 which is provided, with a video signal processing stage (551) for the separation of the lines at the edges of the picture and for the spatial interpolation of the remaining lines, with a subsequently connected colour coder (552), in particular an I-PAL-M coder, with a supporting value processor (58) which generates digital items of supporting information for the reconstruction of the original lines at the receiving end instead of the lines at the edges of the picture and to which a subsequent supporting value coder (59) is connected, with a vision modulator (574) to which the combined output signals of the supporting value coder and of the colour coder are supplied, in particular via a delay stage (572).

16. Decoder for a method in accordance with one or more of the Claims 4 to 12 which is provided with:
    - a vision demodulator (642) whose output signals are supplied to a colour decoder (642), in particular an I-PAL-M decoder, and to a digital supporting value decoder (69) which decodes the digital items of supporting information arranged in the lines at the edges of the picture for the reconstruction of the original lines at the receiving end;
    - a video signal processing circuit (68) connected after the supporting value decoder which regenerates the edge lines,
    - a video signal processing stage (65) connected after the colour decoder which arranges the lines back into the original sequence with the help of the lines at the edges of the picture.

## Revendications

1. Procédé de transmission de télévision compatible avec les normes de télévision traditionnelles avec format d'image de 4/3 dans lequel, côté source d'images (10, 50), il y a exploration avec une grille selon un format d'image agrandi de 16/9 et dans lequel une première bande partielle (31) du signal image est modulée sur une première porteuse image (33), avec les étapes de procédé suivantes :
    a) une ligne est isolée à partir de chaque groupe de quatre lignes successives du signal image et les lignes qui restent sont comprimées spatialement ou interpolées dans la position spatiale correcte ;
    b) les quatrièmes lignes isolées sont ajoutées (151, 551) dans les volumes spatiaux qui deviennent libres sur le bord supérieur et sur le bord inférieur de l'image ;
    c) le signal image qui résulte est transmis en étant codé et
    d) à partir du signal image décodé reçu, le signal image d'origine avec le format 16/9 est reconstruit du fait que les lignes isolées, ajoutées sur le bord supérieur et sur le bord inférieur de l'image sont insérées dans l'ordre correct des lignes dans les autres lignes décomprimées spatialement (25, 65),
    le signal image transmis pouvant, en variante, également être décodé par un récepteur traditionnel de format 4/3 qui reproduit le signal image démodulé à partir de la première bande partielle (31) avec des barres sur le bord supérieur et sur le bord inférieur de l'image et les étapes de procédé suivantes étant réalisées côté émetteur pour la transmission du signal image codé :
    e) les parties actives des lignes isolées, ajoutées sur le bord supérieur et sur le bord inférieur de l'image, sont accrues dans le temps à la durée d'une image (161 à 163 et figure 4) et sont modulées (164) sur une seconde porteuse image (34) située à l'extrémité supérieure du canal de télévision de telle manière que la seconde bande partielle qui résulte (32) se situe essentiellement à l'extérieur de la courbe de transmission FI d'un récepteur traditionnel de format 4/3 (211, 241, 251, 213, 26);
    f) les parties non actives (zone de suppression) des lignes isolées, ajoutées sur le bord supérieur et sur le bord inférieur de l'image, ainsi que les lignes qui restent dans leur totalité sont modulées sur la première porteuse image (33), en particulier avec une temporisation ($\tau$ sur la figure 4) qui correspond à la durée de parcours du signal lors de la décompression (221, 22, 222), de telle manière que la première bande partielle qui résulte (31) se situe essentiellement à l'intérieur de la courbe de transmission FI d'un récepteur traditionnel de format 4/3 (211, 241, 251, 213, 26) et contient le signal standard pour ce récepteur ;
    g) les deux porteuses image modulées (33, 34) sont combinées ensemble avec la ou les porteuse(s) son (35, 36) en signal d'émission (à 13),
    et que, pour la reconstruction du signal image d'origine à partir du signal image décodé reçu, les étapes de procédé suivantes côté récepteur sont réalisées :
    h) la seconde porteuse image (34) qui se situe à l'extrémité supérieure du canal est démodulée et le signal image démodulé à partir de la seconde bande partielle (32) est comprimé dans le temps à l'état initial selon e) ;
    i) la première porteuse image (33) est démodulée et le signal image démodulé à partir de la première bande partielle (31) est ajoutée (23, 242, 25) en temps correct au signal image obtenu à partir de l'étape h), le signal total qui en résulte étant décodé et reproduit (252) avec le format d'image 16/9 selon l'étape d).

2. Procédé selon la revendication 1, **caractérisé en ce** que pour l'exécution de l'étape e) les étapes partielles suivantes sont exécutées :

- à partir du signal qui arrive, les parties actives des lignes isolées sont séparées et mises en mémoire dans une première mémoire intermédiaire (162) avec une première fréquence d'échantillonnage (161), en particulier avec le quadruple de la fréquence de la porteuse couleur ;
- les valeurs d'échantillonnage mises en mémoire dans la première mémoire intermédiaire (162) sont extraites avec une seconde fréquence d'échantillonnage (163), inférieure à la première fréquence d'échantillonnage (161) du rapport

$$\frac{\text{Nombre des lignes isolées x durée de la ligne active}}{\text{Nombre total des lignes x durée des lignes}}$$

3. Procédé selon la revendication 1 et 2, **caractérisé en ce** que pour l'exécution de l'étape h) les étapes partielles suivantes sont exécutées :

- le signal image démodulé à partir de la seconde bande partielle (32) est mis en mémoire dans une seconde mémoire intermédiaire (22) avec une troisième fréquence d'échantillonnage (221) qui est en particulier égale à la seconde fréquence d'échantillonnage (163) ;
- les valeurs d'échantillonnage mises en mémoire dans la seconde mémoire intermédiaire (22) sont extraites avec une quatrième fréquence d'échantillonnage (222), supérieure à la troisième fréquence d'échantillonnage (221), en particulier avec le quadruple de la fréquence de la porteuse couleur, du rapport

$$\frac{\text{Nombre total des lignes x durée des lignes}}{\text{Nombre des lignes isolées x durée de la ligne active}}$$

4. Procédé de transmission de télévision compatible avec les normes de télévision traditionnelles avec format d'image de 4/3 dans lequel, côté source d'images (10, 50), il y a exploration avec une grille selon un format d'image agrandi de 16/9 et dans lequel une première bande partielle (31) du signal image est modulée sur une première porteuse image (33), avec les étapes de procédé suivantes :

a) une ligne est isolée à partir de chaque groupe de quatre lignes successives du signal image et les lignes qui restent sont comprimées spatialement ou interpolées dans la position spatiale correcte ;

b) les quatrièmes lignes isolées sont ajoutées (151, 551) dans les volumes spatiaux qui deviennent libres sur le bord supérieur et sur le bord inférieur de l'image ;

c) le signal image qui résulte est transmis en étant codé et

d) à partir du signal image décodé reçu, le signal image d'origine avec le format 1619 est reconstruit du fait que les lignes isolées, ajoutées sur le bord supérieur et sur le bord inférieur de l'image, sont insérées dans l'ordre correct des lignes dans les autres lignes décomprimées spatialement (25, 65),

le signal image transmis pouvant, en variante, également être décodé par un récepteur traditionnel de format 4/3 qui reproduit le signal image démodulé à partir de la première bande partielle (31) avec des barres sur le bord supérieur et sur le bord inférieur de l'image et les parties actives des lignes isolées étant transmises à l'intérieur d'une zone de niveau entre le niveau du noir (71) décalé en direction du niveau du blanc et le niveau de l'impulsion de synchronisation (73) sur le bord supérieur et sur le bord inférieur de l'image avec un taux de modulation réduit en étant codées en analogique, en particulier comme signaux de différence entre respectivement une ligne isolée et des lignes voisines spatialement ou temporellement.

5. Procédé selon la revendication 4, **caractérisé en ce** qu'en plus le palier du noir à l'arrière (71) est décalé en direction du niveau du blanc (72).

6. Procédé selon la revendication 4 ou 5, **caractérisé en ce** que la porteuse couleur est mise hors circuit dans les lignes sur le bord supérieur et sur le bord inférieur de l'image.

7. Procédé selon la revendication 4, **caractérisé en ce** que dans les volumes spatiaux libres sur le bord supérieur et sur le bord inférieur de l'image uniquement des informations de soutien numériques sont transmises pour la reconstruction des lignes isolées à partir des lignes transmises de manière visible de la même image et/ou de l'image voisine.

8. Procédé selon la revendication 7, **caractérisé en ce** qu'un nombre de vecteurs de mouvement est transmis par ligne isolée comme fonction de soutien numérique.

9. Procédé selon la revendication 7 ou 8, **caractérisé en ce** que les vecteurs de mouvement sont transmis en numérique et que le codage numérique (59) est choisi de telle manière que les fractions d'énergie principales se situent, comme pour un code duobinaire, au milieu du spectre vidéo.

10. Procédé selon la revendication 7, 8 ou 9, **caractérisé en ce** que le cycle de l'information de soutien numérique est couplé à la fréquence ligne.

11. Procédé selon la revendication 7, 9 ou 10, **caractérisé en ce** que la fréquence de cycle est décalée de telle manière que les composantes spectrales de l'information de soutien numérique se situent dans une position favorable de décalage par rapport à la fréquence ligne et de décalage d'image par rapport à la visibilité de la modulation numérique dans les bords dans le récepteur traditionnel de format 4/3.

12. Procédé selon l'une ou plusieurs des revendications 4 à 11, **caractérisé en ce** qu'une ligne est isolée parmi chaque groupe de quatre ou cinq lignes successives.

13. Codeur pour un procédé selon la revendication 1 ou 2, équipé d'un étage de traitement de signal image (151) pour l'isolation et la compression spatiale ou l'interpolation de lignes, avec un codeur couleur placé à la suite (152), en particulier un codeur M PAL I, avec un dispositif pour l'expansion temporelle (161, 162, 163) des lignes à partir des bords, avec un second modulateur d'image placé à la suite (164) et avec un premier modulateur d'image (174), qui est excité en particulier par un étage de temporisation (172), les signaux de sortie du premier et du second modulateur d'image étant combinés.

14. Codeur pour un procédé selon la revendication 1 ou 3, équipé d'un premier démodulateur d'image (211), avec un second démodulateur d'image (212), qui démodule les lignes à partir des bords, et avec un dispositif placé à la suite pour la compression temporelle (221, 22, 222) des lignes à partir des bords, avec un étage addeur (23) pour combiner les signaux de sortie du premier démodulateur d'image et du dispositif pour la compression temporelle, avec un décodeur de couleur placé à la suite (152), en particulier un décodeur M PAL-I, et avec un étage de traitement du signal image (25) qui place les lignes à nouveau dans l'ordre initial et/ou interpole.

15. Codeur pour un procédé selon l'une ou plusieurs des revendications 4 à 12, équipé d'un étage de traitement de signal image (551) pour l'isolation des lignes des bords de l'image et pour l'interpolation spatiale des lignes qui restent, avec un codeur couleur placé à la suite (552), en particulier un codeur M PAL-I, avec un processeur de valeurs de soutien (58) qui produit, à la place des lignes des bords de l'image, des informations de soutien numériques pour la reconstruction côté récepteur des lignes initiales et à la suite duquel un codeur de valeurs de soutien (59) est placé, avec un modulateur d'image (574), auquel les signaux de départ combinés du codeur de valeurs de soutien et du codeur couleur sont amenés, en particulier par un étage de temporisation (572).

16. Décodeur pour un procédé selon l'une ou plusieurs des revendications 4 à 12, équipé :
    - d'un démodulateur d'image (612), dont les signaux de sortie sont amenés à un décodeur couleur (642), en particulier à un décodeur M PAL-I, et à un décodeur de valeurs de soutien numérique (69) qui décode les informations de soutien numériques placées dans les lignes des bords de l'image pour la reconstruction côté récepteur des lignes initiales ;
    - d'un circuit de traitement de signal image (68), placé à la suite du décodeur de valeurs de soutien, qui régénère à nouveau les lignes des bords,
    - d'un étage de traitement du signal image placé à la suite du décodeur de couleur qui, à l'aide des lignes des bords, replace les lignes dans leur ordre initial.

**Fig. 2** Übertragung Breitbild – PAL Empfangsseite

EP 0 451 205 B1

EP 0 451 205 B1

**10**

Bildquelle
16:9
575 akt. Zeilen

R, G, B bzw.
Y, U, V

Umordnung
der Zeilen
1 aus 4   **151**

(I)-PAL (M)
Coder   **152**

**141**

**143**
Sync

**140**   **142**

**11**
Ton → τ ≈ 14 ms
(216 Zeilen)

**12**
(2) Tonmodulator
$f_{Bild}$ + 5,5 MHz
(II$_{Bild}$ +5,75 MHz)

$I_s$   **161**
(S)

0...5 MHz

**162**
Zwischenspeicher
(Expander)
1 : 5,34

$\frac{144}{625} \cdot \frac{52}{64} I_s$   **163**
(S)

0...936 kHz

**164**
Bildmodulator 2
$f_{Bild}$ + 6,7 MHz

**172**
τ ≈ 14 ms
(216 Zeilen)

0...5 MHz

**174**
Bildmodulator 1
$f_{Bild}$

**13**

Fig. 1     Übertragung Breitbild - PAL     Sendeseite

17

EP 0 451 205 B1

**Fig. 3    HF - Spektrum    Standard G   8 MHz Kanalabstand**

**Fig. 4    Expansion und Kompression im Zusatzkanal**

Fig. 5    Übertragung Breitbild – PAL    Sendeseite

50  Bildquelle 16:9  5:3  575 akt. Zeilen

551  Umordnung der Zeilen 1 aus 4 [5]

552  [I]-PAL [ M ] Coder

58  Stützwert Erzeugung

59  digitaler Stützwert Coder

51  $\tau > 14\ ms$

Ton

52  [2] Tonmodulator $f_{Bild} + 5{,}5\ MHz$ $(f_{Bild} + 5{,}75\ MHz)$

53

572  $\tau > 14\ ms$

574  Bildmodulator 1 $f_{Bild}$

0...5 MHz

Fig. 6    Übertragung Breitbild – PAL    Empfangsseite

EP 0 451 205 B1

WEISS
72

Unsichtbare Zeile

Sichtbare Zeile

Bildsignal

71

SCHWARZ

Zusatzinformation

SYNCHRON

73

FIG. 7

EP 0 451 205 B1